# EUROPÄISCHE PATENTSCHRIFT

(11) **EP 0 391 072 B1**
(45) Veröffentlichungstag und Bekanntmachung des Hinweises auf die Patenterteilung: **08.09.1993**
(21) Anmeldenummer: 90104092.3
(22) Anmeldetag: 02.03.1990
(51) Int. Cl.: F16C 29/00, F16C 29/06, F16C 29/12, B23Q 1/26

(54) **Wälzgelagerte Linearführungseinheit**
Linear guiding rolling contact device
Unité de guidage rectiligne à contact de roulement

(30) Priorität: 01.04.1989 DE 8903980 U
(43) Veröffentlichungstag der Anmeldung: 10.10.1990
(73) Patentinhaber: INA Wälzlager Schaeffler KG, 91063 Herzogenaurach (DE)
(72) Erfinder: Bode, Helmut, Dipl.-Ing., D-8522 Herzogenaurach (DE)

(56) Entgegenhaltungen:
- DE-A- 3 245 124
- DE-A- 3 326 541
- DE-C- 3 531 813
- FR-A- 2 532 382
- US-A- 4 756 630
- J.R.Schwinghammer "Stossdämpfer für Werkzeugmaschinen, Maschine + Werkzeug, Media Mail Verlagsgesellschaft, Nr.24, November 1987

## Beschreibung

Die Erfindung betrifft eine wälzgelagerte Linearführungseinheit, bestehend aus einer gehärteten und geschliffenen Führungsschiene, auf der Wälzkörperlaufbahnen ausgebildet sind, sowie einem auf der Führungsschiene längsverschieblich gelagerten Führungswagen, der eine der Führungsschiene abgekehrte Befestigungsfläche und eine dem Profil der Führungsschiene angepaßte Innenkontur aufweist, wobei zwischen den Wälzkörperlaufbahnen der Führungsschiene und gegenüberliegenden Flächen des Führungswagens Wälzkörper in endlosen Umlaufkanälen abrollen, und wobei neben dem Führungswagen ein Dämpfungselement vorgesehen ist, das mit der Führungsschiene einen Dämpfungsspalt bildet.

Derartige Linearführungseinheiten sollen wegen ihres erheblich geringeren Verschiebewiderstandes in verstärktem Maße anstelle von Gleitführungen zur Lagerung von Maschinentischen an Werkzeugmaschinen zum Einsatz kommen. Diesem Bestreben stehen jedoch die unzureichenden Dämpfungseigenschaften entgegen, die derartige wälzgelagerte Linearführungseinheiten im Vergleich zu Gleitführungen aufweisen.

Dies hat zur Folge, daß insbesondere dann, wenn auf derart gelagerten Maschinentischen Werkstücke spanabhebend bearbeitet werden, mechanische Schwingungen auftreten, die zu unsauberen bzw. welligen Oberflächen an diesem Werkstücken führen.

Um hier Abhilfe zu schaffen, hat man bereits neben dem Führungswagen ein Dämpfungselement in Form einer Leiste angeordnet, die, um einen Gleitlagereffekt zu verhindern, mit der Führungsschiene einen mit Öl gefüllten definierten Dämpfungsspalt begrenzt. In dem Aufsatz von J. R. Schwinghammer "Stoßdämpfer für Werkzeugmaschinen", erschienen in "maschine + werkzeug", Media Mail Verlagsgesellschaft, Nr. 24, November 1987, wird eine Linearführungseinheit der eingangs genannten Art beschrieben. Durch die Verwendung einer Leiste als Dämpfungselement wurde zwar eine beachtliche Verbesserung des Dämpfungsverhaltens in vertikaler Richtung erzielt. Dieses ist jedoch noch nicht zufriedenstellend, da sich sowohl horizontal als auch schräg zur Bewegungsrichtung auftretende Schwingungen immer noch störend auswirken.

Auch aus dem Dokument DE-A-3 326 541 ist eine gattungsgemäße Linearführungseinheit mit verbessertem Dämpfungsverhalten in vertikaler Richtung bekannt. Hier weist das Dämpfungselement ein oberhalb des Führungswagens angeordnetes Sattelteil auf, das mit einer Vertiefung lose über einen von dem Wagen oder Bett aufragenden Vorsprung gestülpt ist, so daß sich ein Ringspalt für die Aufnahme von unter Druck gesetztem dämpfend wirkendem Öl bildet. Für das Drucköl benötigt das Sattelteil außerdem mehrere Strömungskanäle. Diese Führungseinheit weist daher eine aufwendige Konstruktion auf.

Der Erfindung liegt die Aufgabe zugrunde, mit einfachen Mitteln eine allseitige Dämpfung zu erzielen.

Erfindungsgemäß wird diese Aufgabe dadurch gelöst, daß das Dämpfungselement in Längsrichtung vor oder hinter dem Führungswagen vorgesehen und als die Führungsschiene umgreifender Schlitten ausgebildet ist, der in Bezug auf die Führungsschiene eine mit dem Führungswagen identische Befestigungsfläche aufweist, wobei die Innenkontur des Schlittens zum überwiegenden Teil dem Profil der Führungsschiene derart angepaßt ist, daß diese einen Dämpfungsspalt von 0 bis 40 µ begrenzen. Durch die vorgeschlagene Ausbildung wird annähernd das gesamte Schienenprofil zur Dämpfung ausgenützt, wodurch sich eine einwandfreie Schwingungsdämpfung in jeder Richtung erzielen läßt. Dabei kann der Schlitten in seiner Länge den gegebenen Anforderungen leicht angepaßt werden. Ein weiterer Vorteil wird durch die äußerst einfache Montage erreicht, da der Schlitten genau wie der Führungswagen montiert wird, so daß eine besondere Einstellung des Dämpfungsspaltes entfallen kann.

In vorteilhafter Weiterbildung der Erfindung ist vorgesehen, daß die dem Profil der Führungsschiene angepaßte Innenkontur des Schlittens mit Kunststoff beschichtet ist. Durch die vorgeschlagene Beschichtung der Innenkontur des Schlittens läßt sich mit einer entsprechend ausgebildeten Schiene ein genau definierter Dämpfungsspalt erzielen.

In weiterer Ausgestaltung der Erfindung wird vorgeschlagen, daß der Schlitten mit Bohrungen versehen ist, die einerseits in den Dämpfungsspalt münden und andererseits direkt oder indirekt mit einer Schmierölleitung verbunden sind. Dadurch ist sichergestellt, daß der Dämpfungsspalt immer mit Öl gefüllt ist, wobei hierzu in der Regel eine Impulsschmierung ausreichend ist, da die Leckverluste äußerst gering sind.

Ein Ausführungsbeispiel der Neuerung ist in den Zeichnungen dargestellt und wird nachfolgend näher beschrieben. Es zeigen:
- Fig. 1: eine schematische Darstellung einer neuerungsgemäßen Linearführungseinheit,
- Fig. 2: einen Querschnitt durch einen Führungswagen und
- Fig. 3: einen Querschnitt durch das als Schlitten ausgebildete Dämpfungselement.

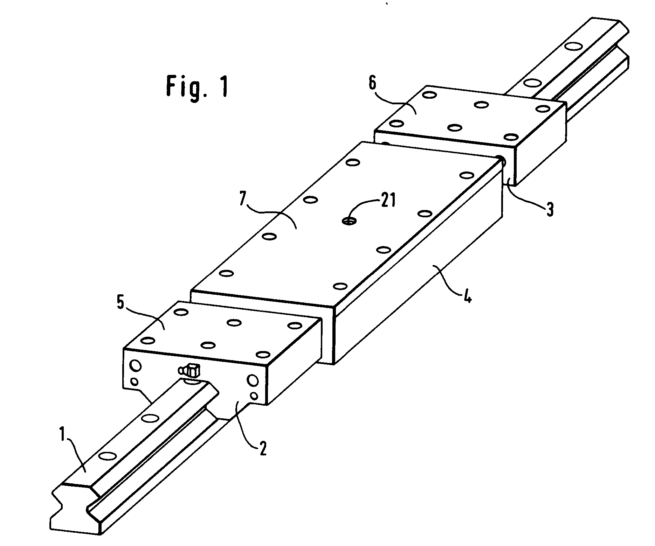

Die in Figur 1 schematisch dargestellte wälzgelagerte Linearführungseinheit besteht aus der gehärteten und geschliffenen Führungsschiene 1, den auf dieser längsverschieblich gelagerten Führungswagen 2 und 3 sowie dem zwischen diesen angeordneten Dämpfungselement in Form eines Schlittens 4. Jeder der Führungswagen 2 und 3 weist eine der Führungsschiene 1 abgekehrte Befestigungsfläche 5 bzw. 6 auf. Der Schlitten 4 ist in Bezug auf die Führungsschiene 1 ebenfalls mit einer dem Führungswagen 2 bzw. 3 identischen Befestigungsfläche 7 versehen.

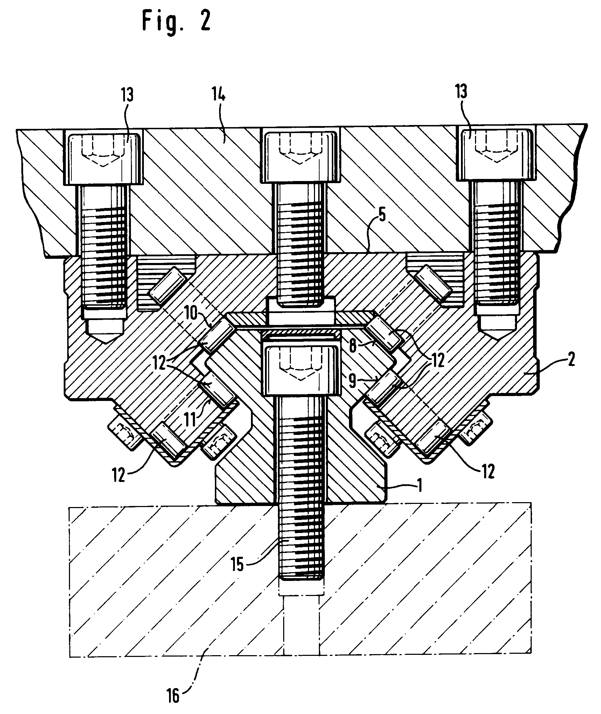

Wie Figur 2 zeigt, sind auf der Führungsschiene 1 Wälzkörperlaufbahnen 8 und 9 ausgebildet. Jeder Führungswagen 2 bzw. 3 weist eine dem Profil der Führungsschiene 1 angepaßte Innenkontur auf, wobei zwischen den Wälzkörperlaufbahnen 8 und 9 der Führungsschiene 1 und gegenüberliegenden Flächen 10 und 11 in jedem Führungswagen 2 bzw. 3 Wälzkörper 12 in endlosen, an sich bekannten Umlaufkanälen abrollen.

Die Führungswagen 2 und 3 sind mittels ihrer Befestigungsflächen 5 und 6 durch Schrauben 13 an einem angedeuteten Maschinentisch 14 befestigt, während die Führungsschiene 1 durch Schrauben 15 mit dem ebenfalls angedeuteten Maschinengestell 16 fest verbunden ist.

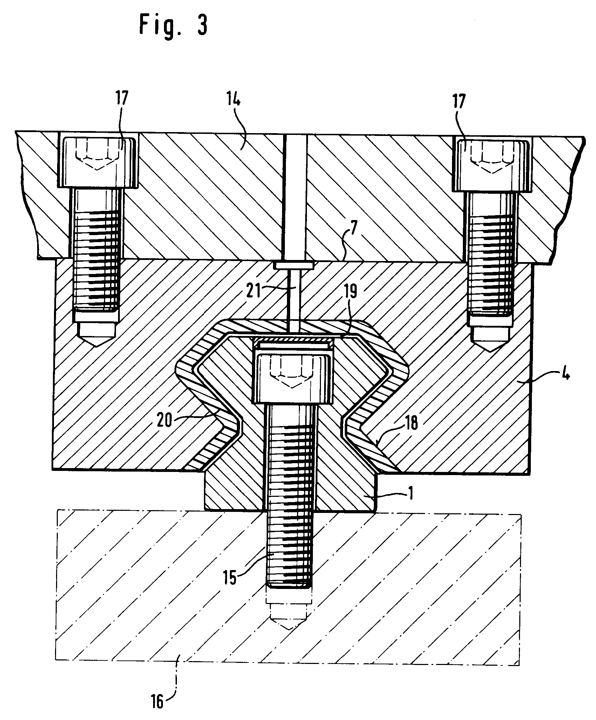

Gemäß dem Schnitt nach Figur 3 ist das zwischen den Führungswagen 2 und 3 angeordnete Dämpfungselement als die Führungsschiene 1 umgreifender Schlitten 4 ausgebildet und in gleicher Weise wie die Führungswagen 2 und 3 mit Schrauben 17 am Maschinentisch 14 befestigt.

Die Innenkontur 18 des Schlittens 4 ist zum überwiegenden Teil dem Profil der Führungsschiene 1 derart angepaßt, daß diese einen Dämpfungsspalt 19 von 0 bis 40 µ begrenzen.

Dabei ist die dem Profil der Führungsschiene 1 angepaßte Innenkontur 18 des Schlittens 4 mit Kunststoff 20 beschichtet.

Die Kunststoffschicht 20 kann so hergestellt sein, daß in den Schlitten 4 eine Schiene eingesetzt wird, deren Querschnittskontur um das Maß des gewünschten Dämpfungsspaltes größer als die später zur Verwendung kommende Schiene 1 ist. Anschließend wird der verbleibende Hohlraum zwischen dem Schlitten 4 und der eingesetzten Schiene mit Kunststoff ausgegossen oder ausgespritzt und nach dessen Erkalten bzw. Aushärten die Schiene entfernt.

Zur Zuführung von Öl in den Dämpfungsspalt 19 ist der Schlitten 4 mit Bohrungen 21 versehen, die einerseits in den Dämpfungsspalt 19 münden und andererseits direkt oder indirekt mit einer nicht dargestellten Schmierölleitung verbunden sind.

## Patentansprüche

1. Wälzgelagerte Linearführungseinheit, bestehend aus einer gehärteten und geschliffenen Führungsschiene (1), auf der Wälzkörperlaufbahnen (8, 9) ausgebildet sind, sowie einem auf der Führungsschiene (1) längsverschieblich gelagerten Führungswagen (2, 3), der eine der Führungsschiene (1) abgekehrte Befestigungsfläche (5, 6) und eine dem Profil der Führungsschiene (1) angepaßte Innenkontur aufweist, wobei zwischen den Wälzkörperlaufbahnen (8, 9) der Führungsschiene (1) und gegenüberliegenden Flächen (10, 11) des Führungswagens (2, 3) Wälzkörper (12) in endlosen Umlaufkanälen abrollen, und wobei neben dem Führungswagen (2, 3) ein Dämpfungselement vorgesehen ist, das mit der Führungsschiene (1) einen Dämpfungsspalt (19) bildet, **dadurch gekennzeichnet**, daß das Dämpfungselement in Längsrichtung vor oder hinter dem Führungswagen (2, 3) vorgesehen und als die Führungsschiene (1) umgreifender Schlitten (4) ausgebildet ist, der in Bezug auf die Führungsschiene (1) eine mit dem Führungswagen (2, 3) identische Befestigungsfläche (7) aufweist, wobei die Innenkontur (18) des Schlittens (4) zum überwiegenden Teil dem Profil der Führungsschiene (1) derart angepaßt ist, daß diese einen Dämpfungsspalt (19) von 0 bis 40 µ begrenzen.

2. Wälzgelagerte Linearführungseinheit nach Anspruch 1, **dadurch gekennzeichnet**, daß die dem Profil der Führungsschiene (1) angepaßte Innenkontur (18) des Schlittens (4) mit Kunststoff (20) beschichtet ist.

3. Wälzgelagerte Linearführungseinheit nach Anspruch 1 oder 2, **dadurch gekennzeichnet**, daß der Schlitten (4) mit Bohrungen (21) versehen ist, die einerseits in den Dämpfungsspalt (19) münden und andererseits direkt oder indirekt mit einer Schmierölleitung verbunden sind.

## Claims

1. Rolling-bearing-mounted linear guiding unit comprising a hardened and polished guide rail (1) on which rolling element raceways (8, 9) are formed, and, mounted for longitudinal displacement on the guide rail (1), a guide carriage (2, 3) provided with a fixing surface (5, 6) facing away from the guide rail (1) and an inner contour adapted in shape to the profile of the guide rail (1), wherein rolling elements (12) roll in endless circulation canals between the rolling element raceways (8, 9) of the guide rail (1) and opposite surfaces (10, 11) of the guide carriage (2, 3), a damping element being provided adjacent to the guide carriage (2, 3) and forming a damping gap (19) with the guide rail (1), characterized in that the damping element is disposed in front of or behind the guide carriage (2, 3) in the longitudinal direction and is formed as a saddle (4) engaging around the guide rail (1) and comprising an identical fixing surface (7) with respect to the guide rail (1) as the guide carriage (2, 3), the inner contour (18) of the saddle (4) being mainly adapted to the profile of the guide rail (1) in such a way that these components delimit a damping gap (19) of 0 to 40 µ.

2. Rolling-bearing-mounted linear guiding unit according to claim 1, characterized in that the inner contour (18) of the saddle (4), adapted to the profile of the guide rail (1), is coated with a plastics material (20).

3. Rolling-bearing-mounted linear guiding unit according to claim 1 or 2, characterized in that the saddle (4) is provided with bores (21) which open on one side into the damping gap (19) and are directly or indirectly connected on the other side with a lubricating oil duct.

## Revendications

1. Unité de guidage linéaire montée sur palier à roulement et comprenant un rail de guidage (1) durci et poli sur lequel sont formés des chemins de roulement (8, 9) pour des corps roulants, ainsi qu'un chariot de guidage (2, 3) monté en déplacement longitudinal sur le rail de guidage (1) et muni d'une surface de fixation (5, 6) opposée au rail de guidage (1) et ayant un contour intérieur dont la forme est adaptée au profil du rail de guidage (1), unité dans laquelle des corps roulants (12) roulent dans des canaux de circulation sans fin formés entre les chemins de roulement (8, 9) du rail de guidage (1) et des surfaces (10, 11) opposées du chariot de guidage (2, 3), un élément d'amortissement étant prévu à côté du chariot de guidage (2, 3) pour former avec le rail de guidage (1) un intervalle d'amortissement (19), caractérisée en ce que l'élément d'amortissement est disposé devant ou derrière le chariot de guidage (2, 3) suivant une direction longitudinale et qu'il est configuré sous la forme d'un coulisseau (4) entourant le rail de guidage (1) et ayant, par rapport au rail de guidage (1), une surface de fixation (7) identique à celle du chariot de guidage (2, 3), le contour intérieur (18) du coulisseau (4) étant en grande partie adapté au profil du rail de guidage (1) de telle façon que ces deux parties délimitent un intervalle d'amortissement (19) de l'ordre de 0 à 40 µ.

2. Unité de guidage linéaire montée sur palier à roulement selon la revendication 1, caractérisée en ce que le contour intérieur (18) du coulisseau (4) qui est adapté au profil du rail de guidage (1) est revêtu d'une matière plastique (20).

3. Unité de guidage linéaire montée sur palier à roulement selon la revendication 1 ou 2, caractérisée en ce que le coulisseau (4) est muni d'alésages (21) qui, d'un côté, débouchent dans l'intervalle d'amortissement (19) et qui, de l'autre côté, sont raccordés directement ou indirectement à un conduit d'huile de graissage.
